# EUROPEAN PATENT APPLICATION

(11) **EP 4 843 666 A1**
(43) Date of publication of application: **25.11.2026**
(21) Application number: 25761244.0
(22) Date of filing: 20.02.2025
(51) Int. Cl.: B01J 29/80, B01D 53/86, B01D 53/94, B01J 29/76

(54) **CATALYST FOR GAS-PHASE AMMONIA DECOMPOSITION, CATALYST BODY, PROCESS, AND DEVICE FOR GAS-PHASE AMMONIA DECOMPOSITION**

(30) Priority: 29.02.2024 JP 2024030683
(71) Applicant: Mitsubishi Heavy Industries, Ltd., Chiyoda-ku Tokyo 100-8332 (JP)
(72) Inventor: KANEDA, Shimpei, Tokyo 100-8332 (JP); NOJIMA, Shigeru, Tokyo 100-8332 (JP); TAKEDA, Masayuki, Tokyo 100-8332 (JP); MASUDA, Tomotsugu, Tokyo 100-8332 (JP); KAI, Keiichiro, Tokyo 100-8332 (JP)
(74) Representative: Studio Torta S.p.A.
(86) International application number: PCT/JP2025/005856
(87) International publication number: WO 2025/182770

(57) **Abstract**

A catalyst for gas-phase ammonia decomposition includes, as an active catalyst component, a mixture of a first catalyst powder that contains a support containing at least one selected from the group consisting of ceria, silica, alumina, titania, zirconia, titanosilicate, and aluminosilicate, and contains ruthenium and platinum supported on the support, and a second catalyst powder that contains at least one selected from the group consisting of iron ion-exchanged BEA-type aluminosilicate, cobalt ion-exchanged BEA-type aluminosilicate, and copper ion-exchanged BEA-type aluminosilicate, in which, in the first catalyst powder, an amount of the platinum with respect to 1 part by mass of the ruthenium is 0.001 parts by mass or more and less than 1 part by mass.

## Description

### Technical Field

The present invention relates to a catalyst for ammonia decomposition and an exhaust gas treatment method. More specifically, the present invention relates to a catalyst (catalyst for gas-phase ammonia decomposition) that can promote a gas-phase decomposition reaction of ammonia (NH₃) while suppressing by-product formation of NO_{X} and/or N₂O and can promote a gas-phase decomposition reaction of NO_{X} and/or N₂O, and to a gas-phase reaction process that can decompose NH₃ and decompose NO_{X} and/or N₂O while suppressing by-product formation of NO_{X} and/or N₂O.

The present application claims the right of priority based on Japanese Patent Application No. 2024-030683 filed with the Japan Patent Office on February 29, 2024, the content of which is incorporated herein by reference.

### Background Art

Toward realization of carbon neutrality, ammonia fuel that does not emit carbon dioxide during combustion is expected. When ammonia fuel is burned, a gas containing NH₃, NO_{X}, and N₂O is exhausted. NO_{X} and N₂O may adversely affect the environment. In particular, since N₂O has a high global warming potential (GWP) of approximately 300, it is strongly required to suppress an emission amount thereof.

In addition, in fields in which ammonia is stored and used, such as ammonia-fueled ships, ammonia transport ships, ammonia fuel storage bases, ammonia tanks for denitration apparatuses in power plants, and ammonia cooling and refrigerating apparatuses, for example, when tanks, pipes, and the like are purged with nitrogen or the like, a gas containing NH₃ is released in a large amount. In treatment of ammonia-containing wastewater, such as food and drinking water production wastewater, chemical plant wastewater, plating wastewater, semiconductor component production wastewater, and domestic wastewater, for example, a gas containing NH₃ is released in a large amount in a stripping tower or the like. NH₃ is a malodorous substance that causes mucosal irritation, respiratory irritation, conjunctival edema, corrosion, and the like.

Various catalysts and methods for promoting a decomposition reaction of NO_{X} (nitrogen monoxide (NO) and nitrogen dioxide (NO₂)) or N₂O (nitrous oxide), or catalysts and methods for promoting a decomposition reaction of NH₃ have been proposed.

For example, PTL 1 discloses an exhaust gas purification catalyst having a nitrogen oxide ammonia reduction function and an ammonia oxidative decomposition function, characterized by being made of, as a first component, a composition consisting of titanium oxide and an oxide of one or more elements selected from molybdenum, tungsten, and vanadium or a composition consisting of zeolite supporting copper or iron, and, as a second component, a component supported in advance on a porous body, the component consisting of platinum and at least one metal selected from the group consisting of iridium, palladium, rhodium, and ruthenium and containing the metal at a weight ratio of the metal to platinum of more than 0 and 5 or less. However, PTL 1 only specifically discloses, in Examples, an exhaust gas purification catalyst obtained by combining a first component consisting of Ti oxide, W oxide, and V oxide and a second component consisting of ruthenium and platinum, and an exhaust gas purification catalyst obtained by combining a first component obtained by subjecting Cu ions to ion exchange treatment with mordenite and a second component consisting of iridium and platinum.

PTL 2 discloses a diesel engine exhaust gas aftertreatment device that includes a diesel particulate matter filter which is disposed on the most upstream side on an exhaust pipe connected to an exhaust manifold of an engine, a diesel oxidation catalyst (DOC catalyst) which is disposed on a downstream side of the diesel particulate matter filter, and an ammonia SCR catalyst which is disposed on a downstream side of the diesel oxidation catalyst and includes zeolite, and is characterized in that the diesel oxidation catalyst is formed of a support on which a single active substance composed of ruthenium is supported or a support on which a composite active substance composed of platinum and ruthenium and having a weight ratio of platinum to ruthenium of 2 or less is supported. However, PTL 2 discloses only that the ammonia SCR catalyst is disposed on the downstream side of the diesel oxidation catalyst.

PTL 3 discloses an ammonia slip catalyst including a first SCR catalyst and an oxidation catalyst including ruthenium or a ruthenium mixture (for example, a mixture of Pt and Ru) supported on a support including a rutile phase and a substrate. PTL 3 discloses that ruthenium is contained in an amount of 0.1% to 10% by weight with respect to the ammonia slip catalyst; that the term "mixture of Pt and Ru" includes an alloy of platinum and ruthenium, a mixed metal oxide of Pt and Ru, a mixture of discrete oxide particles of Pt and Ru on a support, or a combination thereof; that, in each case, ruthenium is present in an amount of more than 50 mol%; and that, as an example of the first SCR catalyst, there is a Cu-SCR catalyst including copper and a molecular sieve or an Fe-SCR catalyst including iron and a molecular sieve. However, Patent Literature 3 only specifically discloses, in Examples, a material in which only ruthenium is supported on a support as an oxidation catalyst.

PTL 4 discloses an ammonia decomposition catalyst for treating exhaust gas containing ammonia and moisture, the ammonia decomposition catalyst having a first layer including a precious metal, an inorganic oxide, and a first proton-type zeolite or a first ion-exchanged zeolite ion-exchanged with Cu, Co, or Fe ions, and a second layer provided on a surface of the first layer and including a second proton-type zeolite or a second ion-exchanged zeolite ion-exchanged with Cu, Co, or Fe ions, in which the first and second proton-type zeolites and the first and second ion-exchanged zeolites have a CHA-type structure. PTL 4 states that the precious metal is at least one selected from the group consisting of Pt, Pd, Ir, and Rh.

PTL 5 discloses a catalyst device for removing nitrogen oxides and ammonia from exhaust gas of a lean-burn combustion engine, the catalyst device including an upstream SCR catalyst including a support substrate and a first washcoat containing a first SCR catalyst active composition applied to the support substrate, and a downstream ASC catalyst including a support substrate, a lower layer including a third washcoat containing an oxidation catalyst applied on the support substrate, and an upper layer including a second washcoat containing a second SCR catalyst active composition applied on the lower layer. PTL 5 teaches that the oxidation catalyst includes a platinum-group metal selected from the group consisting of ruthenium, rhodium, palladium, iridium, and platinum.

In addition, as a catalyst for treating wastewater containing a nitrogen compound such as ammonia, for example, PTL 6 discloses a wastewater treatment catalyst that is a catalyst used in wet oxidation treatment of wastewater and is characterized by including ruthenium, a compound containing, as an A component, at least one element selected from the group consisting of iron, titanium, silicon, aluminum, zirconium, and cerium, and, as a B component, at least one precious metal selected from the group consisting of silver, gold, platinum, palladium, and iridium or a compound containing the precious metal, in which a mass ratio of ruthenium/B component (Ru/B ratio) is 2/1 or more and 50/1 or less.

### Citation List

### Patent Literatures

[PTL 1] Japanese Unexamined Patent Application Publication No. H8-290062
[PTL 2] Japanese Unexamined Patent Application Publication No. 2011-52679
[PTL 3] International Publication No. WO 2018/057844 A1
[PTL 4] Japanese Unexamined Patent Application Publication No. 2022-105849
[PTL 5] Japanese Translation of PCT International Application Publication No. 2024-500370
[PTL 6] Japanese Unexamined Patent Application Publication No. 2014-140800

### Summary of Invention

### Technical Problem

An object of the present invention is to provide a catalyst (catalyst for gas-phase ammonia decomposition) that can promote a gas-phase decomposition reaction of ammonia (NH₃) while suppressing by-product formation of NO_{X} and/or N₂O and can promote a gas-phase decomposition reaction of NO_{X} and/or N₂O, and to provide a gas-phase reaction process that can decompose NH₃ and decompose NO_{X} and/or N₂O while suppressing by-product formation of NO_{X} and/or N₂O.

### Solution to Problem

[1] A catalyst for gas-phase ammonia decomposition, including, as an active catalyst component: a mixture of a first catalyst powder that contains a support containing at least one selected from the group consisting of ceria, silica, alumina, titania, zirconia, titanosilicate, and aluminosilicate, and contains ruthenium and platinum supported on the support, and a second catalyst powder that contains at least one selected from the group consisting of iron ion-exchanged BEA-type aluminosilicate, cobalt ion-exchanged BEA-type aluminosilicate, and copper ion-exchanged BEA-type aluminosilicate,
   in which, in the first catalyst powder, an amount of the platinum with respect to 1 part by mass of the ruthenium is 0.001 parts by mass or more and less than 1 part by mass.
[2] The catalyst according to [1], in which, in the first catalyst powder, the amount of the platinum with respect to 1 part by mass of the ruthenium is 0.01 parts by mass or more and less than 0.5 parts by mass, an amount of the platinum contained in 100 parts by mass of the first catalyst powder is 0.01 to 2 parts by mass, and an amount of the ruthenium contained in 100 parts by mass of the first catalyst powder is 2 to 10 parts by mass.
[3] The catalyst according to [1], in which, in the first catalyst powder, the amount of the platinum with respect to 1 part by mass of the ruthenium is 0.01 parts by mass or more and less than 0.5 parts by mass, an amount of the platinum contained in 100 parts by mass of a total amount of the first catalyst powder and the second catalyst powder is 0.001 to 0.1 parts by mass, and an amount of the ruthenium contained in 100 parts by mass of the total amount of the first catalyst powder and the second catalyst powder is 0.01 to 1 part by mass.
[4] The catalyst according to any one of [1] to [3], in which, in the first catalyst powder, the support contains at least one selected from the group consisting of silica, titanosilicate, MEL-type aluminosilicate, and MFI-type aluminosilicate.
[5] The catalyst according to any one of [1] to [4], in which the second catalyst powder contains iron ion-exchanged BEA-type aluminosilicate.
[6] The catalyst according to any one of [1] to [5], in which the second catalyst powder contains iron ion-exchanged OSDA-free BEA-type aluminosilicate.
[7] A catalyst body for gas-phase ammonia decomposition, including:
   a substrate; and
   the catalyst according to any one of [1] to [6] supported on the substrate.
[8] A catalyst body for gas-phase ammonia decomposition, consisting of a shaped body including the catalyst according to any one of [1] to [6].
[9] A process comprising performing, in a gas to be treated, in the presence of the catalyst according to any one of [1] to [6],
   a chemical reaction that converts NH₃ into nitrogen and water, and
   a chemical reaction that converts NO_{X} and N₂O into nitrogen and water.
[10] A process for performing, in a gas to be treated, a chemical reaction that converts NH₃ into nitrogen and water and a chemical reaction that converts NO_{X} and N₂O into nitrogen and water, the process including:
   continuously passing the gas to be treated through a first catalyst layer in which a catalyst is placed, the catalyst including, as an active catalyst component, only a second catalyst powder containing at least one selected from the group consisting of iron ion-exchanged BEA-type aluminosilicate, cobalt ion-exchanged BEA-type aluminosilicate, and copper ion-exchanged BEA-type aluminosilicate; and
   subsequently continuously passing the gas to be treated through a second catalyst layer in which the catalyst according to any one of [1] to [6] is placed.
[11] A process for performing, in a gas to be treated, a chemical reaction that converts NH₃ into nitrogen and water and a chemical reaction that converts NO_{X} and N₂O into nitrogen and water, the process including:
   continuously passing the gas to be treated through a first catalyst layer in which the catalyst according to any one of [1] to [6] is placed; and
   subsequently continuously passing the gas to be treated through a second catalyst layer in which the catalyst according to any one of [1] to [6] is placed,
   in which a proportion of the platinum contained in the catalyst placed in the first catalyst layer is less than a proportion of the platinum contained in the catalyst placed in the second catalyst layer.
[12] The process according to [9], [10], or [11], further including adding, to the gas to be treated, at least one reaction aid selected from the group consisting of ammonia and urea.
[13] A device for gas-phase ammonia decomposition, including:
   a first catalyst layer in which a catalyst is placed, the catalyst including, as an active catalyst component, only a second catalyst powder containing at least one selected from the group consisting of iron ion-exchanged BEA-type aluminosilicate, cobalt ion-exchanged BEA-type aluminosilicate, and copper ion-exchanged BEA-type aluminosilicate; and
   a second catalyst layer in which the catalyst according to any one of [1] to [6] is placed, the second catalyst layer being disposed downstream of the first catalyst layer.
[14] A device for gas-phase ammonia decomposition, comprising:
   a first catalyst layer in which the catalyst according to any one of [1] to [6] is placed; and
   a second catalyst layer in which the catalyst according to any one of [1] to [6] is placed, the second catalyst layer being disposed downstream of the first catalyst layer,
   in which a proportion of the platinum contained in the catalyst placed in the first catalyst layer is less than a proportion of the platinum contained in the catalyst placed in the second catalyst layer.

### Advantageous Effects of Invention

The catalyst according to the present invention has an ammonia reduction function for nitrogen oxides (NO_{X}) and nitrous oxide (N₂O) and an oxidative decomposition function for ammonia (NH₃). The catalyst according to the present invention can promote a gas-phase decomposition reaction of ammonia (NH₃) while suppressing by-product formation of NO_{X} and/or N₂O, and can promote a gas-phase decomposition reaction of NO_{X} and/or N₂O. The catalyst according to the present invention is suitable for a chemical reaction for converting a gas containing NH₃ into a gas having a low NH₃ concentration, a low NO_{X} concentration, and/or a low N₂O concentration.

The process according to the present invention can decompose ammonia (NH₃) and decompose NO_{X} and/or N₂O while suppressing by-product formation of NO_{X} and/or N₂O. The process according to the present invention is suitable for converting a gas containing NH₃ into a gas having a low NH₃ concentration, a low NO_{X} concentration, and/or a low N₂O concentration.

A chemical reaction capable of directly converting NH₃ into nitrogen and water (direct decomposition reaction of ammonia) is represented by Formula (4).

4NH₃ + 3O₂ → 2N₂ + 6H₂O (4)

A chemical reaction capable of converting NO_{X} into nitrogen and water (gas-phase decomposition reaction of NO_{X}) is represented by Formula (6), Formula (7), and Formula (8).

4NO + 4NH₃ + O₂ → 4N₂ + 6H₂O (6)

6NO₂ + 8NH₃ → 7N₂ + 12H₂O (7)

NO + NO₂ + 2NH₃ → 2N₂ + 3H₂O (8)

A chemical reaction capable of converting N₂O into nitrogen and water (gas-phase decomposition reaction of N₂O) is represented by Formula (9).

3N₂O + 2NH₃ → 4N₂ + 3H₂O (9)

In parallel with the chemical reaction represented by Formula (4), chemical reactions (side reactions) represented by Formula (1), Formula (2), and Formula (3) may proceed.

4NH₃ + 5O₂ → 4NO + 6H₂O (1)

4NH₃ + 7O₂ → 4NO₂ + 6H₂O (2)

2NH₃ + 2O₂ → N₂O + 3H₂O (3)

NO_{X} and N₂O are harmful substances that affect the environment and the like. As described above, since the catalyst according to the present invention promotes the chemical reaction that can directly convert NH₃ into nitrogen and water (direct decomposition reaction of ammonia), the degree of progress of reactions that form NO_{X} and N₂O as by-products (side reactions) decreases. Since the catalyst according to the present invention also promotes the decomposition reaction of NO_{X} and the decomposition reaction of N₂O, as a result, the catalyst according to the present invention promotes the chemical reaction (indirect decomposition reaction of ammonia) capable of converting NH₃ into nitrogen and water through intermediates (NO_{X} and N₂O).

### Brief Description of Drawings

FIG. 1 is a diagram showing a relationship between a NO_{X} by-product formation rate at 500°C and an NH₃ decomposition reaction rate at 350°C, which are results of Evaluation (1).
FIG. 2 is a diagram showing a relationship between an N₂O by-product formation rate at 350°C and an NH₃ decomposition reaction rate at 350°C, which are results of Evaluation (1).
FIG. 3 is a diagram showing a relationship between a NO_{X} by-product formation rate at 500°C, which is a result of Evaluation (1), and an NH₃ decomposition reaction rate aging ratio at 350°C, which is a result of Evaluation (1) and Evaluation (2).
FIG. 4 is a diagram showing a relationship between an N₂O by-product formation rate at 350°C, which is a result of Evaluation (1), and an NH₃ decomposition reaction rate aging ratio at 350°C, which is a result of Evaluation (1) and Evaluation (2).
FIG. 5 is a diagram showing a relationship between a NO_{X} by-product formation rate at 500°C and an NH₃ decomposition reaction rate at 350°C, which are results of Evaluation (2).
FIG. 6 is a diagram showing a relationship between an N₂O by-product formation rate at 350°C and an NH₃ decomposition reaction rate at 350°C, which are results of Evaluation (2).
FIG. 7 is a diagram showing a relationship between a NO_{X} by-product formation rate at 500°C, which is a result of Evaluation (2), and an NH₃ decomposition reaction rate aging ratio at 350°C, which is a result of Evaluation (1) and Evaluation (2).
FIG. 8 is a diagram showing a relationship between an N₂O by-product formation rate at 350°C, which is a result of Evaluation (2), and an NH₃ decomposition reaction rate aging ratio at 350°C, which is a result of Evaluation (1) and Evaluation (2).

### Description of Embodiments

The catalyst for gas-phase ammonia decomposition according to the present invention includes a mixture of a first catalyst powder and a second catalyst powder, as an active catalyst component.

The first catalyst powder contains a support and ruthenium and platinum supported on the support.

The support used for the first catalyst powder is a support containing at least one selected from the group consisting of ceria, silica, alumina, titania, zirconia, titanosilicate, and aluminosilicate. As the support used for the first catalyst powder, a support containing silica, alumina, and/or titania is preferable, and a support containing silica, titanosilicate, or aluminosilicate is more preferable. The support used for the first catalyst powder is preferably porous. A specific surface area of the support used for the first catalyst powder is not particularly limited, and is, for example, preferably 10 to 1,000 m²/g, and more preferably 50 to 500 m²/g. Specific examples of the support used for the first catalyst powder include: ceria powder, silica powder, alumina powder, titania powder, zirconia powder, titanosilicate powder, or aluminosilicate powder; a mixture of two or more powders selected from the group consisting of ceria powder, silica powder, alumina powder, titania powder, zirconia powder, titanosilicate powder, and aluminosilicate powder; a powder of a composite of two or more oxides selected from the group consisting of ceria, silica, alumina, titania, zirconia, titanosilicate, and aluminosilicate (for example, silica titania, alumina titania, ceria titania, silica alumina, silica zirconia, alumina zirconia, and the like); and a powder obtained by doping at least one powder selected from the group consisting of ceria powder, silica powder, alumina powder, titania powder, zirconia powder, titanosilicate powder, and aluminosilicate powder with, supporting on the at least one powder, or compositing the at least one powder with, at least one element selected from the group consisting of cerium, silicon, aluminum, titanium, and zirconium and different from an element constituting the powder and/or one or more other base metal elements such as molybdenum, tungsten, and vanadium. The powder subjected to doping, supporting, or compositing tends to be highly resistant to hydrothermal aging.

The titanosilicate is a composite of titania and silica, and the aluminosilicate is a composite of alumina and silica. The silica, titanosilicate, or aluminosilicate may be a hydrous oxide or a hydrated oxide, or may be an anhydrous oxide.

The support used for the first catalyst powder is preferably crystalline and porous. The silica and the aluminosilicate may have a structure formed by laminating SiO₄ tetrahedral sheets (a structure in which SiO₄ tetrahedra are two-dimensionally connected through an oxygen atom; a layered structure), but preferably have a zeolite structure or a structure in which SiO₄ tetrahedra are three-dimensionally connected through an oxygen atom. The titanosilicate may be a composite having a structure in which titania is coated with silica or a composite having a structure in which silica is coated with titania. The titanosilicate preferably used in the present invention has a titania/silica ratio of preferably 0.1/99.9 to 99.9/0.1, more preferably 50/50 to 99.5/0.5, and still more preferably 70/30 to 99/1.

Examples of the structure of the aluminosilicate used for the first catalyst powder include A-type (LTA-type), X-type (FAU-type), LSX-type (FAU-type), beta-type (BEA-type), ZSM-5-type (MFI-type), ZSM-11-type (MEL-type), ferrierite-type (FER-type), mordenite-type (MOR-type), L-type (LTL-type), Y-type (FAU-type), MCM-22-type (MWW-type), offretite/erionite-type (O/E-type), AEI-type, AEL-type, AFT-type, AFX-type, CHA-type, EAB-type, ERI-type, KFI-type, LEV-type, LTN-type, MSO-type, RHO-type, SAS-type, SAT-type, SAV-type, SFW-type, TON-type, and TSC-type. Among these, MFI-type or MEL-type is preferable, and MFI-type is more preferable.

In the first catalyst powder, ruthenium and platinum are supported on the support. In the first catalyst powder, an amount of platinum (Pt) with respect to 1 part by mass of ruthenium (Ru) is 0.001 parts by mass or more and less than 1 part by mass, more preferably 0.005 parts by mass or more and less than 0.8 parts by mass, still more preferably 0.01 parts by mass or more and less than 0.5 parts by mass, yet still more preferably 0.03 parts by mass or more and 0.3 parts by mass or less, and most preferably 0.015 parts by mass or more and 0.25 parts by mass or less.

In the first catalyst powder, an amount of platinum (Pt) contained in 100 parts by mass of the first catalyst powder is preferably 0.01 to 2 parts by mass, more preferably 0.05 to 1.5 parts by mass, and still more preferably 0.01 to 1.2 parts by mass.

In the first catalyst powder, an amount of ruthenium (Ru) contained in 100 parts by mass of the first catalyst powder is preferably 2 to 10 parts by mass, more preferably 3 to 8 parts by mass, and still more preferably 4 to 6 parts by mass.

In the first catalyst powder, another metal element other than the ruthenium and platinum may be supported on the support. Examples of other metal elements include gold, silver, rhodium, palladium, osmium, iridium, and rhenium; rare earth elements such as cerium (Ce); and base metal elements such as molybdenum, tungsten, and vanadium. A proportion of the rare earth element to the support in the first catalyst powder is not particularly limited as long as the effects of the present invention are not inhibited. For example, in the first catalyst powder, an amount of the rare earth element with respect to 1 part by mass of the total amount of ruthenium and platinum is preferably 1 part by mass or more and less than 10 parts by mass, more preferably 3 parts by mass or more and 7 parts by mass or less, and still more preferably 4 parts by mass or more and 6 parts by mass or less. The first catalyst powder obtained by supporting a metal element other than the ruthenium and platinum on the support tends to have high resistance to hydrothermal aging (a high aging ratio).

The preparation of the first catalyst powder includes, for example, supporting ruthenium and platinum on the support, and then performing pulverization or crushing as necessary. The supporting can be performed, for example, by dipping the support in a solution, suspension, or emulsion containing ruthenium and platinum. Supporting another metal element other than the ruthenium and platinum can also be performed in a similar manner. Kneading, evaporation to dryness, drying, sintering, and the like can be performed after dipping. The temperature during drying may be a temperature at which the liquid can be removed, and is, for example, 100°C to 150°C. The temperature during sintering may be lower than the heat-resistant temperature of the support, and is, for example, 350°C to 550°C. The sintering time is, for example, 1 to 5 hours.

The first catalyst powder is preferably porous. The pore size distribution of the first catalyst powder is not particularly limited. The first catalyst powder is not particularly limited by the particle size distribution, as long as it forms a fine powder. The particle size distribution can be adjusted by pulverization/crushing, classification, and the like.

The second catalyst powder contains at least one selected from the group consisting of iron ion-exchanged BEA-type aluminosilicate, cobalt ion-exchanged BEA-type aluminosilicate, and copper ion-exchanged BEA-type aluminosilicate.

The iron ion-exchanged BEA-type aluminosilicate, the cobalt ion-exchanged BEA-type aluminosilicate, or the copper ion-exchanged BEA-type aluminosilicate is formed by exchanging some or all of cations in BEA-type aluminosilicate with iron ions, cobalt ions, or copper ions.

The BEA-type aluminosilicate that can be subjected to ion exchange preferably has a Si/Al_{framework} ratio of 9 or more in framework analysis. As the proportion of Si increases, durability of the catalyst tends to increase. In a spectrum measured by ²⁹Si MAS NMR, resonance absorptions of Si(0Al), Si(1Al), Si(2Al), Si(3Al), and Si(4Al) are respectively observed according to the number n of T atoms that are Al among four TO₄ adjacent to (SiO₄)⁴⁻. The Si/Al_{framework} is calculated from peak intensities I_{Si(nAl)} by a known method.

The BEA-type aluminosilicate that can be subjected to ion exchange is preferably porous. A pore size of the BEA-type aluminosilicate that can be subjected to ion exchange is not particularly limited, and is, for example, preferably 0.01 to 10 nm and more preferably 0.2 to 2 nm.

A specific surface area of the BEA-type aluminosilicate that can be subjected to ion exchange is not particularly limited, and is, for example, preferably 100 to 1,200 m²/g and more preferably 200 to 800 m²/g.

The BEA-type aluminosilicate can be obtained, for example, by mixing a silica source, an alumina source, an alkali source, a solvent, an organic structure-directing agent (OSDA), a surfactant, and the like to obtain a starting reaction mixture, and subjecting the starting reaction mixture to a hydrothermal reaction under high temperature and high pressure in an autoclave. The BEA-type aluminosilicate obtained by the method contains an organic component derived from OSDA. The organic component can be removed by subsequent sintering.

The BEA-type aluminosilicate can be obtained by a hydrothermal reaction without using OSDA. Without using OSDA, the BEA-type aluminosilicate can be obtained by performing mechanochemical treatment and a steam synthesis method. The BEA-type aluminosilicate obtained without using OSDA (hereinafter, may be referred to as OSDA-free BEA-type aluminosilicate) does not contain the organic component derived from OSDA. In the present invention, the OSDA-free BEA-type aluminosilicate can preferably be subjected to ion exchange.

The ion exchange can be performed by dipping the BEA-type aluminosilicate or the OSDA-free BEA-type aluminosilicate in a liquid containing iron ions, cobalt ions, or copper ions, and then, as necessary, performing filtration, drying, and sintering. A pH of the liquid containing iron ions, cobalt ions, or copper ions is preferably appropriately adjusted so as to promote the ion exchange. The pH of the liquid containing iron ions, cobalt ions, or copper ions is, for example, 1 to 8, preferably 1.2 to 6, and more preferably 1.5 to 5. For pH adjustment, basic compounds such as sodium hydroxide, potassium hydroxide, rubidium hydroxide, cesium hydroxide, sodium carbonate, and potassium carbonate, or acidic compounds such as hydrochloric acid and nitric acid can be used.

The temperature during drying may be a temperature at which the liquid can be removed, and is, for example, 100°C to 150°C. The temperature during sintering may be lower than the heat-resistant temperature of the BEA-type aluminosilicate or OSDA-free BEA-type aluminosilicate, and is, for example, 350°C to 800°C. The sintering time can be appropriately set according to the temperature during sintering, and is, for example, 1 to 10 hours. After ion exchange, pulverization or crushing can be performed as necessary to obtain a powder.

The amount of iron ions, cobalt ions, or copper ions exchanged for the cations is preferably 0.1% to 10% by mass, and more preferably 0.7% to 7% by mass with respect to the BEA-type aluminosilicate or the OSDA-free BEA-type aluminosilicate.

The second catalyst powder may contain a material in which at least one selected from the group consisting of Fe, Co, and Cu is adhered (supported) on the BEA-type aluminosilicate or the OSDA-free BEA-type aluminosilicate.

The second catalyst powder is preferably porous. The pore size distribution of the second catalyst powder is not particularly limited. The second catalyst powder is not particularly limited by the particle size distribution, as long as it forms a fine powder. The particle size distribution can be adjusted by pulverization/crushing, classification, and the like. In addition, the second catalyst powder preferably has a Si/Al_{framework} ratio of 9 or more. The second catalyst powder preferably has a Si/Al_{framework} ratio that did not change before and after the ion exchange.

The second catalyst powder has acid sites derived from an OH group or the like. The properties of the acid sites can generally be observed by a method known as a pyridine-TPD method. In the pyridine-TPD method, for example, a flame ionization detector (FID) can be used as a detector. Pyridine is adsorbed on the acid sites. Pyridine can be adsorbed on the acid sites of both an outer surface and an inner surface of pores of the catalyst. It is generally understood that, as the temperature at which the adsorbed pyridine desorbs increases, the acid strength of the acid sites increases. It is also said that pyridine desorbed at a high temperature is from acid sites affected by diffusion, that is, acid sites on the inner surfaces of pores (Nakano et al., "Measurement of Acid Properties of Zeolite by Temperature-Programmed Desorption Method," Toyo Soda Research Report, Vol. 29, No. 1 (1985), pp. 3 to 11). It is said that the effective molecular diameter of pyridine is 5.8 Å (see Anderson et al., J. Catal., 58, 114 (1979)). The total amount of acid sites can be determined by the saturated adsorption amount of pyridine. When pyridine is adsorbed and subsequently heated at a certain rate (20 °C/min), the acid strength distribution of the acid sites can be determined by a distribution of the amounts of pyridine desorbed at respective temperatures (this distribution may be referred to as a TPD spectrum). In the present invention, the adsorption of pyridine can be performed at room temperature to 150°C, and preferably at 150°C.

In a TPD spectrum of the second catalyst powder, a ratio of a total amount of pyridine desorbed in a range of 150°C or higher and lower than 450°C to a total amount of pyridine desorbed in a range of 450°C or higher and 800°C or lower is preferably 0.9 or more, more preferably 0.98 or more, still more preferably 1 or more, and yet still more preferably 1.1 or more. The upper limit of the ratio of the total amount of pyridine desorbed in a range of 150°C or higher and lower than 450°C to the total amount of pyridine desorbed in a range of 450°C or higher and 800°C or lower is not particularly limited as long as the catalyst can be produced.

In the TPD spectrum of the second catalyst powder, the total amount of pyridine desorbed in a range of 150°C or higher and lower than 450°C is preferably 100 µmol or more, more preferably 200 µmol or more, still more preferably 250 µmol or more, and yet still more preferably 300 µmol or more per 1 g of the catalyst. The upper limit of the total amount of pyridine desorbed in a range of 150°C or higher and lower than 450°C is not particularly limited as long as the catalyst can be produced.

In the TPD spectrum of the second catalyst powder, the total amount of pyridine desorbed in a range of 450°C or higher and 800°C or lower is preferably 1,000 µmol or less, more preferably 800 µmol or less, and still more preferably 500 µmol or less per 1 g of the catalyst. The lower limit of the total amount of pyridine desorbed in a range of 450°C or higher and 800°C or lower is not particularly limited as long as the catalyst can be produced.

In the TPD spectrum of the second catalyst powder, a value of a L peak (a pyridine desorption amount at a maximum peak top present in a range of 150°C or higher and lower than 450°C) is more than a value of a H peak (a pyridine desorption amount at a maximum peak top present in a range of 450°C or higher and 800°C or lower). That is, a ratio of the value of the L peak to the value of the H peak is preferably more than 1, more preferably 1.12 or more, still more preferably 1.2 or more, yet still more preferably 1.4 or more, and most preferably 1.6 or more. The upper limit of the ratio of the value of the L peak to the value of the H peak is not particularly limited as long as the catalyst can be produced.

In the TPD spectrum of the second catalyst powder, the lower limit of a temperature at which the H peak appears (a temperature at a maximum peak top present in a range of 450°C or higher and 800°C or lower) is preferably 490°C, more preferably 510°C, and still more preferably 530°C, and the upper limit thereof is preferably 650°C, more preferably 620°C, still more preferably 600°C, and yet still more preferably 580°C.

In the second catalyst powder, the saturated adsorption amount of pyridine is preferably large. In the second catalyst powder, the saturated adsorption amount of pyridine is preferably 100 µmol or more, more preferably 200 µmol or more, still more preferably 500 µmol or more, and yet still more preferably 700 µmol or more per 1 g of the catalyst. In the second catalyst powder, as long as the catalyst can be produced, the upper limit of the saturated adsorption amount of pyridine is not particularly limited, and is, for example, preferably 2,000 µmol, and more preferably 1,500 µmol per 1 g of the catalyst. The saturated adsorption amount of pyridine can be measured at 150°C.

The second catalyst powder preferably has a large crystallite size. In the second catalyst powder, the crystallite size is preferably 5 nm or more, more preferably 10 nm or more, still more preferably 20 nm or more, and yet still more preferably 30 nm or more. In the second catalyst powder, the upper limit of the crystallite size is not particularly limited as long as the catalyst can be produced, and is, for example, preferably 100 nm, and more preferably 80 nm. The crystallite size can be measured using an X-ray diffraction method (for example, refer to JIS H 7805 or JIS R 7651).

Even after being exposed to a gas at 530°C containing 20% of H₂O and 20 ppm of SO₂ for 70 hours, the second catalyst powder preferably has a high NO₂ decomposition rate and a high NO decomposition rate. Even after being exposed to a gas at 530°C containing 20% of H₂O and 20 ppm of SO₂ for 70 hours, the second catalyst powder preferably has an NO₂ decomposition rate of 60% or more and an NO decomposition rate of 90% or more under a condition of 450°C.

The catalyst for gas-phase ammonia decomposition according to the present invention may include a third catalyst powder as an active catalyst component, in addition to the first catalyst powder and the second catalyst powder.

The third catalyst powder contains an oxide of titanium, an oxide of tungsten and/or molybdenum, and an oxide of cerium and/or vanadium, and preferably contains an oxide of titanium, an oxide of tungsten, and an oxide of cerium.

The proportion of a Ce element and/or a V element to a Ti element is preferably 1% to 20% by weight, and more preferably 3% to 15% by weight as a percentage by weight of (CeO₂ + V₂O₅)/TiO₂.

The proportion of a Mo element and/or a W element to a Ti element is preferably 1% to 50% by weight, and more preferably 10% to 40% by weight as a percentage by weight of (MoO₃ + WO₃)/TiO₂.

In the preparation of the third catalyst powder, a titanium oxide powder or a titanium oxide precursor can be used as a raw material of the oxide of titanium. Examples of the titanium oxide precursor include titanium oxide slurry, titanium oxide sol; titanium sulfate, titanium tetrachloride, titanate, and titanium alkoxide. In the present invention, an anatase type titanium oxide is preferably used as a raw material of the oxide of titanium. As a raw material of the oxide of vanadium, a vanadium compound such as vanadium pentoxide, ammonium metavanadate, and vanadyl sulfate can be used. As a raw material of the oxide of tungsten, ammonium paratungstate, ammonium metatungstate, tungsten trioxide, tungsten chloride, and the like can be used. As a raw material of the oxide of molybdenum, ammonium molybdate, molybdenum trioxide, and the like can be used. As a raw material of the oxide of cerium, cerium(III) nitrate, cerium(IV) nitrate, cerium carbonate, cerium(III) sulfate, cerium(IV) sulfate, cerium(III) acetate, and the like can be used.

The third catalyst powder may contain an oxide of P, an oxide of S, an oxide of Al (for example, alumina), an oxide of Si (for example, glass fiber), an oxide of Zr (for example, zirconia), gypsum (for example, gypsum dihydrate), zeolite, and the like as a promoter or an additive. These can be used in the form of powder, sol, slurry, fiber, or the like in the preparation of the catalyst.

The preparation of the third catalyst powder includes, for example, adding a solvent (for example, water) to raw materials of the respective oxides and an optional promoter or additive, performing kneading, subjecting the obtained kneaded material to evaporation to dryness, drying, and sintering, and performing pulverization or crushing as necessary to obtain a powder. The temperature during drying may be a temperature at which the liquid can be removed, and is, for example, 100°C to 150°C. The temperature during sintering may be lower than the heat-resistant temperature of the oxide, and is, for example, 350°C to 550°C. The sintering time is, for example, 1 to 5 hours.

The third catalyst powder is preferably porous. The pore size distribution of the third catalyst powder is not particularly limited. The third catalyst powder is not particularly limited by the particle size distribution, as long as it forms a fine powder. The particle size distribution can be adjusted by pulverization/crushing, classification, and the like.

The mixture included in the catalyst according to the present invention can be obtained by mixing the first catalyst powder, the second catalyst powder, and, as necessary, the third catalyst powder. The mixing may be dry mixing or wet mixing. After mixing, it is possible to conduct drying or sintering, pulverization/crushing, granulation, and classification as necessary. The temperature during drying may be a temperature at which the liquid can be removed, and is, for example, 100°C to 150°C. The temperature during sintering may be lower than the heat-resistant temperature of the oxide, and is, for example, preferably 350°C to 650°C, more preferably 450°C to 600°C, and still more preferably 480°C to 570°C. The sintering time can be appropriately set according to the temperature during sintering, and is, for example, 1 to 5 hours. The catalyst according to the present invention is not particularly limited by the particle size distribution. The particle size distribution can be adjusted by pulverization/crushing, granulation, classification, and the like.

The mixing ratio of the first catalyst powder and the second catalyst powder or the mixing ratio of the first catalyst powder, the second catalyst powder, and the third catalyst powder can be set, for example, so that the NH₃ concentration, the NO_{X} concentration, and the N₂O concentration are each within a predetermined range in a gas which flows out from the catalyst layer or reactor.

The amount of the first catalyst powder contained in the catalyst according to the present invention is preferably 0.01% to 10% by mass, more preferably 0.1% to 5% by mass, and still more preferably 0.5% to 3% by mass.

The amount of the second catalyst powder with respect to 1 part by mass of the first catalyst powder is preferably 1 to 100 parts by mass, more preferably 10 to 70 parts by mass, and still more preferably 20 to 55 parts by mass.

In the catalyst according to the present invention, the amount of the platinum contained in 100 parts by mass of the total amount of the first catalyst powder and the second catalyst powder is preferably 0.0005 to 0.2 parts by mass and more preferably 0.001 to 0.1 parts by mass.

In the catalyst according to the present invention, the amount of the ruthenium contained in 100 parts by mass of the total amount of the first catalyst powder and the second catalyst powder is preferably 0.01 to 1 part by mass and more preferably 0.05 to 0.5 parts by mass.

The total amount of the ruthenium and the platinum contained in the catalyst according to the present invention is preferably 1 to 5,000 ppm, more preferably 10 to 3,000 ppm, still more preferably 100 to 2,000 ppm, and yet still more preferably 250 to 1,800 ppm.

The third catalyst powder can be mixed in a case where heat resistance is required. An amount of the third catalyst powder with respect to 1 part by mass of the first catalyst powder is preferably 0 to 70 parts by mass, more preferably 0 to 50 parts by mass, and still more preferably 0 to 30 parts by mass. As the proportion of the third catalyst powder increases, the NH₃ concentration at the outlet can be lowered in a reaction at a high temperature of 500°C or higher.

In the present invention, the catalyst according to the present invention may be adhered (supported) to a substrate to form a catalyst body for gas-phase ammonia decomposition, or a shaped body obtained by shaping the catalyst according to the present invention may be used as a catalyst body for gas-phase ammonia decomposition.

Examples of the substrate include a honeycomb substrate; a corrugated substrate; and a plate-like substrate (lath plate) such as expanded metal and perforated metal (punching metal). The amount of the catalyst adhering to the substrate can be appropriately set in consideration of an improvement in catalyst filling rate and the like.

The shaped body can have a shape such as a honeycomb, corrugated shape, cone, truncated cone, ellipsoid, spindle, Raschig ring, Dixon, saddle, and McMahon, in consideration of improvement in catalyst filling rate, suppression of an increase in pressure loss, and the like.

When producing the catalyst body, the catalyst according to the present invention may contain, as an additive, an amorphous metal oxide such as amorphous silica, amorphous alumina, and amorphous titania.

After supporting on the substrate or shaping, drying or sintering can be performed as necessary. The temperature during drying may be a temperature at which the liquid can be removed, and is, for example, 100°C to 150°C. The temperature during sintering may be lower than the heat-resistant temperature of the mixture, and is, for example, preferably 350°C to 650°C, more preferably 450°C to 600°C, and still more preferably 480°C to 570°C. The sintering time can be appropriately set according to the temperature during sintering, and is, for example, 1 to 5 hours.

The process according to the present invention includes performing, in a gas to be treated, in the presence of the catalyst according to the present invention, a chemical reaction that converts NH₃ into nitrogen and water and a chemical reaction that converts NO_{X} and N₂O into nitrogen and water. NO_{X} and N₂O may be originally contained in the gas to be treated as described later, or may be generated during the above-described chemical reaction.

The gas to be treated contains an NH₃-containing gas. Examples of the NH₃-containing gas include an exhaust gas generated by combustion of ammonia fuel, an exhaust gas emitted by purging of ammonia-related equipment, and an exhaust gas emitted in the treatment for ammonia-containing wastewater. As the NH₃-containing gas, for example, it is possible to use gases exhausted from the fields where ammonia is stored and used, such as ammonia fuel ships, ammonia transport ships, ammonia fuel storage bases, ammonia tanks for a denitration apparatus in a power plant, and ammonia cooling/refrigerating apparatuses, and the fields where ammonia-containing wastewater, such as wastewater from food/beverage manufacturing, chemical factory wastewater, plating wastewater, wastewater from semiconductor component manufacturing, and domestic wastewater, is treated. In a case where NH₃ is dissolved in a liquid, adsorbed on a solid, or the like, NH₃ can be vaporized by a stripping tower, a vaporizer, or the like and used.

The gas to be treated preferably further contains an O₂-containing gas. As the O₂-containing gas, for example, the air can be used. For example, in a case where the O₂ concentration in the NH₃-containing gas is at a level sufficient to perform the above-described chemical reaction, the NH₃-containing gas can be used as it is as the gas to be treated; and otherwise, a gas obtained by mixing the NH₃-containing gas and the O₂-containing gas can be used as the gas to be treated.

The mass ratio of O₂ to NH₃ can be appropriately set such that, for example, an NH₃ concentration, a NO_{X} concentration, and an N₂O concentration in a gas obtained by the above-described chemical reaction (hereinafter, may be referred to as a treated gas) are each within a desired range.

The exhaust gas generated by combustion of ammonia fuel contains NO_{X} and/or N₂O. The gas to be treated may further contain NO_{X} and/or N₂O.

The chemical reaction in the process according to the present invention is preferably performed in a reactor of a continuous flow system. A catalyst layer is installed in the reactor, and a catalyst is placed in the catalyst layer. The catalyst layer can be in the form of a fixed bed, a fluidized bed, a moving bed, a simulated moving bed, or the like, and preferably in the form of a fixed bed or a simulated moving bed.

In the continuous flow system, a gas adjusted to a predetermined temperature flows in from a reactor inlet to cause a chemical reaction in the catalyst layer in the reactor, and the gas flows out from a reactor outlet. A space velocity [1/hr] (= volume flow rate (m³/hr)/catalyst volume (m³)) of the gas flowing in the reactor can be set such that, for example, an NH₃ concentration, a NO_{X} concentration, and an N₂O concentration in the gas flowing out from the catalyst layer or the reactor are each within a predetermined range. The temperature of the gas at the reactor inlet is, for example, preferably 300°C to 600°C, and more preferably 350°C to 550°C.

A preferred embodiment of the process according to the present invention includes, in order to perform, in the gas to be treated, a chemical reaction that converts NH₃ into nitrogen and water and a chemical reaction that converts NO_{X} and N₂O into nitrogen and water, for example: continuously passing the gas to be treated through a first catalyst layer in which a catalyst is placed, the catalyst containing, as an active catalyst component, only a second catalyst powder containing at least one selected from the group consisting of iron ion-exchanged BEA-type aluminosilicate, cobalt ion-exchanged BEA-type aluminosilicate, and copper ion-exchanged BEA-type aluminosilicate; and subsequently continuously passing the gas to be treated through a second catalyst layer in which the catalyst according to the present invention is placed.

Another preferred embodiment of the process according to the present invention includes, in order to perform, in the gas to be treated, a chemical reaction that converts NH₃ into nitrogen and water and a chemical reaction that converts NO_{X} and N₂O into nitrogen and water, for example: continuously passing the gas to be treated through a first catalyst layer in which the catalyst according to the present invention is placed; and subsequently continuously passing the gas to be treated through a second catalyst layer in which the catalyst according to the present invention is placed, in which a proportion of platinum contained in the catalyst placed in the first catalyst layer is less than a proportion of platinum contained in the catalyst placed in the second catalyst layer.

In the catalyst layer in which the catalyst according to the present invention is placed (second catalyst layer), the gas-phase decomposition reaction of NO_{X} (reaction represented by Formula (6), Formula (7), or Formula (8)), the gas-phase decomposition reaction of N₂O (reaction represented by Formula (9)), and the direct decomposition reaction of NH₃ (reaction represented by Formula (4)) are promoted in a well-balanced manner, and the side reaction forming N₂O as a by-product (reaction represented by Formula (3)) is suppressed. As the temperature increases, the gas-phase decomposition reaction of N₂O and the direct decomposition reaction of NH₃ tend to be promoted.

In the first catalyst layer, the gas-phase decomposition reaction of NO_{X} (reaction represented by Formula (6), Formula (7), or Formula (8)) is mainly promoted, and the gas-phase decomposition reaction of N₂O (reaction represented by Formula (9)) is also promoted. As the temperature increases, the gas-phase decomposition reaction of NO_{X} and the gas-phase decomposition reaction of N₂O tend to be promoted.

The gas-phase decomposition reaction of NO_{X}, promoted in the first catalyst layer, generates a large amount of heat. As a result, the gas flowing out from the first catalyst layer tends to have a higher temperature than the gas flowing into the first catalyst layer. As the temperature of the gas flowing into the catalyst layer using the catalyst according to the present invention (second catalyst layer) becomes higher, the temperature of the catalyst layer using the catalyst according to the present invention (second catalyst layer) becomes higher, so that the gas-phase decomposition reaction of N₂O and the direct decomposition reaction of NH₃ tend to be promoted. Further heat is also generated by the direct decomposition reaction of NH₃, promoted in the catalyst layer using the catalyst according to the present invention (second catalyst layer). As a result, even when the gas to be treated has a high ammonia concentration, in the process according to the present invention using the first catalyst layer and the second catalyst layer, NH₃ can be efficiently decomposed, and a treated gas with a low N₂O emission concentration can be obtained.

NH₃ is also consumed in the gas-phase decomposition reaction of NO_{X} and the gas-phase decomposition reaction of N₂O, promoted in the first catalyst layer. When NH₃ is consumed in the first catalyst layer and the amount of ammonia contained in the gas flowing into the catalyst layer using the catalyst according to the present invention (second catalyst layer) is small, the progression of the side reaction forming N₂O as a by-product (reaction represented by Formula (3) or the like) is suppressed. As a result, even in a case where the gas to be treated has a low ammonia concentration, in the process according to the present invention using the first catalyst layer and the second catalyst layer, the N₂O concentration in the treated gas is significantly reduced.

As described above, in the process according to the present invention using the first catalyst layer and the second catalyst layer, it is possible to handle gases to be treated having a wide range of ammonia concentrations, from a gas to be treated having a low ammonia concentration to a gas to be treated having a high ammonia concentration. For example, in an NH₃ fuel marine engine, amounts of NOx, N₂O, and NH₃ contained in an exhaust gas may change significantly depending on an engine load. Even for the exhaust gas having such concentration fluctuations, by applying the process according to the present invention, NH₃ can be efficiently decomposed, and a treated gas with a low N₂O emission concentration can be obtained.

The temperature during the above-described chemical reaction can be appropriately set such that, for example, an NH₃ concentration, a NO_{X} concentration, and an N₂O concentration in the treated gas are each within a desired range. Temperature adjustment can be performed by a known method, for example, by heating or cooling a gas or equipment around a site where the catalyst is present (hereinafter, may be referred to as a catalyst layer) using temperature adjustment means such as a heater, a jacket, or a heat transfer tube; or by heating or cooling the gas to be treated flowing into the catalyst layer. In many cases, the gas exhausted from a combustion device such as a furnace or an internal combustion engine is at a high temperature. The inflow of the high-temperature gas to be treated tends to increase the temperature of the catalyst. In a case where the catalyst continues to be exposed to an excessively high temperature, deterioration in catalyst performance may result. The temperature adjustment of the gas to be treated can be performed by adding a low-temperature gas such as air to the gas to be treated, performing heat exchange between the gas to be treated and a heat transfer medium through a partition wall, or the like. The treated gas may be used as the heat transfer medium.

The process according to the present invention preferably includes adding, to the gas to be treated, at least one reaction aid selected from the group consisting of ammonia and urea. Urea decomposes into carbon dioxide and ammonia through an endothermic reaction. The reaction aid is preferably added in a case where the amounts of NO_{X} and N₂O contained in the gas to be treated are large, or the like.

An amount of the reaction aid added to the gas to be treated is preferably adjusted based on the temperature of the gas to be treated or the treated gas, and amounts of NO_{X} and N₂O contained in the gas to be treated or the treated gas. The addition of the reaction aid to the gas to be treated leads to an increase in the amount of NH₃ at sites where the direct decomposition reaction of NH₃, the gas-phase decomposition reaction of NO_{X}, and the gas-phase decomposition reaction of N₂O are performed. The increase in the amount of NH₃ at the sites where the reactions are performed causes an increase in the temperature of the catalyst layer and an increase in the temperature of the gas to be treated, while causing a decrease in the amounts of NH₃, NO_{X}, and N₂O contained in the treated gas.

As the temperature of the catalyst layer increases, rates of the direct decomposition reaction of NH₃ and the gas-phase decomposition reaction of N₂O tend to increase. However, as the temperature of the catalyst layer increases, the risk of catalyst deterioration increases. The direct decomposition reaction of NH₃, the gas-phase decomposition reaction of NO_{X}, and the gas-phase decomposition reaction of N₂O decrease NH₃ in the gas to be treated. In a case where NH₃ decreases too much, the gas-phase decomposition reaction of NO_{X} and the gas-phase decomposition reaction of N₂O are less likely to proceed, but the side reaction forming N₂O as a by-product is also less likely to proceed.

The temperature of the treated gas in each stage of the catalyst layers is, for example, preferably 400°C to 600°C, and more preferably 450°C to 550°C. The concentration of NO_{X} in the treated gas in the final stage is, for example, preferably 500 ppm or less, and more preferably 200 ppm or less. The concentration of N₂O in the treated gas in the final stage is, for example, preferably 100 ppm or less, and more preferably 10 ppm or less.

Next, examples for demonstrating the effects of the present invention will be described. However, the scope of the present invention is not limited to the examples. Table 6 shows a mass ratio between the first catalyst powder and the second catalyst powder and a Ru/Pt ratio in the catalyst bodies produced in Examples 1 to 18.

### [Example 1: Honeycomb Catalyst Body A]

### (Preparation of First Catalyst Powder (1))

A chloroplatinic acid aqueous solution and a ruthenium nitrate aqueous solution were added to pure water, and stirred to obtain a dipping solution having a predetermined concentration. MFI-type aluminosilicate (pentasil-based, pore size = 5.8 Å, nominal cation form = hydrogen ion, SiO₂/Al₂O₃ ratio = 24 [mol/mol], specific surface area = 330 m²/g-BET method, crystal size = 0.1 [µm] × 0.5 [µm], particle size = 5 µm, NH₃-TPD = 1.8 mmol/g) was added to the dipping solution and stirred to obtain a slurry. The slurry was evaporated to dryness. The obtained dry solid was dried at 120°C for 2 hours or longer. The obtained dried material was subjected to a sintering treatment by heating it from room temperature to 500°C at a temperature raising rate of 250 °C/h in air and then maintaining it at 500°C for 2 hours. The obtained sintered product was dry-pulverized to obtain a first catalyst powder (1) in which 0.1% by mass of platinum and 5.0% by mass of ruthenium were supported on the MFI-type aluminosilicate.

### (Preparation of Second Catalyst Powder (1))

Iron nitrate nonahydrate was dissolved in 1 L of ion-exchanged water at 80°C to obtain an iron nitrate aqueous solution (Fe concentration = 6% by mass) at 80°C. The pH of the iron nitrate aqueous solution was 1.7. To the iron nitrate aqueous solution, 60 g (dry mass) of OSDA-free BEA-type aluminosilicate (SiO₂/Al₂O₃ ratio = 12, specific surface area = 370 m²/g) was added, and the mixture was stirred for 2 hours while maintaining the temperature at 80°C to perform an ion exchange treatment, thereby obtaining a slurry. The slurry was subjected to a dehydration treatment using a suction funnel equipped with filter paper. Pure water was poured onto the cake on the filter paper to wash the cake. The washed cake was dried at 120°C for 4 hours or longer. The obtained dried material was pulverized. The pulverized product was subjected to a sintering treatment by heating it from room temperature to 600°C at a temperature raising rate of 100 °C/h in air and then maintaining it at 600°C for 5 hours. The obtained sintered product was dry-pulverized to obtain a second catalyst powder (1) consisting of OSDA-free BEA-type aluminosilicate ion-exchanged with Fe ions.

### (Production of Catalyst Body)

2 parts by mass of the first catalyst powder (1), 98 parts by mass of the second catalyst powder (1), silica sol (OS-1 manufactured by Nissan Chemical Corporation), and alumina sol (AS-200 manufactured by Nissan Chemical Corporation) were added to pure water to obtain a slurry. A cordierite honeycomb substrate (50 cpsi) was dipped in the slurry. The cordierite honeycomb substrate was withdrawn from the slurry, and subjected to an air blow treatment to drain liquid. Next, the resultant was dried at 120°C for 2 hours or longer. The obtained dried material was subjected to a sintering treatment by heating it from room temperature to 500°C at a temperature raising rate of 250 °C/h in air and then maintaining it at 500°C for 2 hours, thereby obtaining a honeycomb catalyst body A. With respect to the total mass of the first catalyst powder (1) and the second catalyst powder (1), the mass of platinum was 20 ppm and the mass of ruthenium was 1,000 ppm.

### (Evaluation (1) of Catalyst)

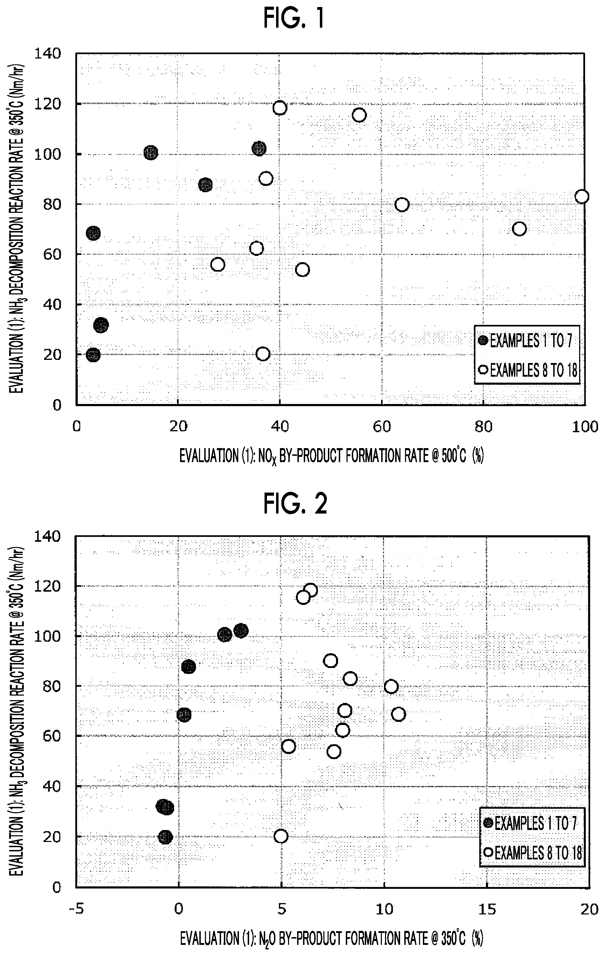

The honeycomb catalyst body A was fitted and fixed in a tubular reactor. A simulated gas A containing the components shown in Table 1 was passed through the tubular reactor at SV = 10,000 hr⁻¹, and the temperature of the tubular reactor was set to 350°C, 400°C, 450°C, or 500°C. An NH₃ concentration, an NO_{X} concentration, and an N₂O concentration at a reactor outlet were measured, and an NH₃ decomposition reaction rate, an NO_{X} by-product formation rate, and an N₂O by-product formation rate were calculated by the following expressions. Results are shown in Table 3 and FIGS. 1 and 2. 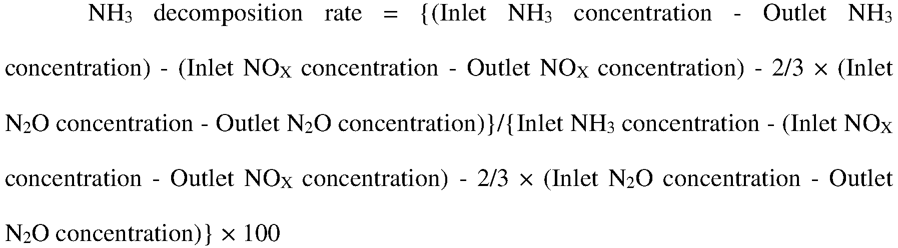 NH3 decomposition rate = {(Inlet NH3 concentration - Outlet NH3 concentration) - (Inlet NOX concentration - Outlet NOX concentration) - 2/3 × (Inlet N2O concentration - Outlet N2O concentration)}/{Inlet NH3 concentration - (Inlet NOX concentration - Outlet NOX concentration) - 2/3 × (Inlet N2O concentration - Outlet N2O concentration)} × 100 ${NH}_{3} decomposition reaction rate = AV \times - Ln \left(1-{NH}_{3} decomposition rate/100\right)$ 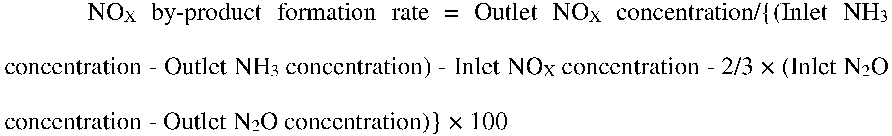 NOX by-product formation rate = Outlet NOX concentration/{(Inlet NH3 concentration - Outlet NH3 concentration) - Inlet NOX concentration - 2/3 × (Inlet N2O concentration - Outlet N2O concentration)} × 100 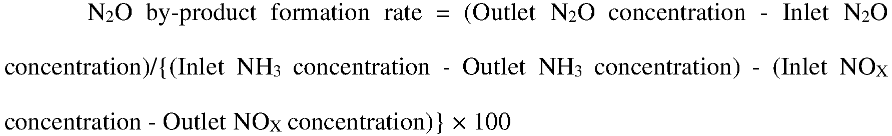 N2O by-product formation rate = (Outlet N2O concentration - Inlet N2O concentration)/{(Inlet NH3 concentration - Outlet NH3 concentration) - (Inlet NOX concentration - Outlet NOX concentration)} × 100 $AV = Amount of gas / Geometric surface area of honeycomb catalyst body$

**[Table 1]**

| Gas type | Concentration |
|---|---|
| O₂ | 10% |
| SO₂ | 20 ppm |
| N₂O | 100 ppm |
| NO | 5000 ppm |
| NH₃ | 8000 ppm |
| H₂O | 20% |
| N₂O | Balance |

### (Evaluation (2) of Catalyst)

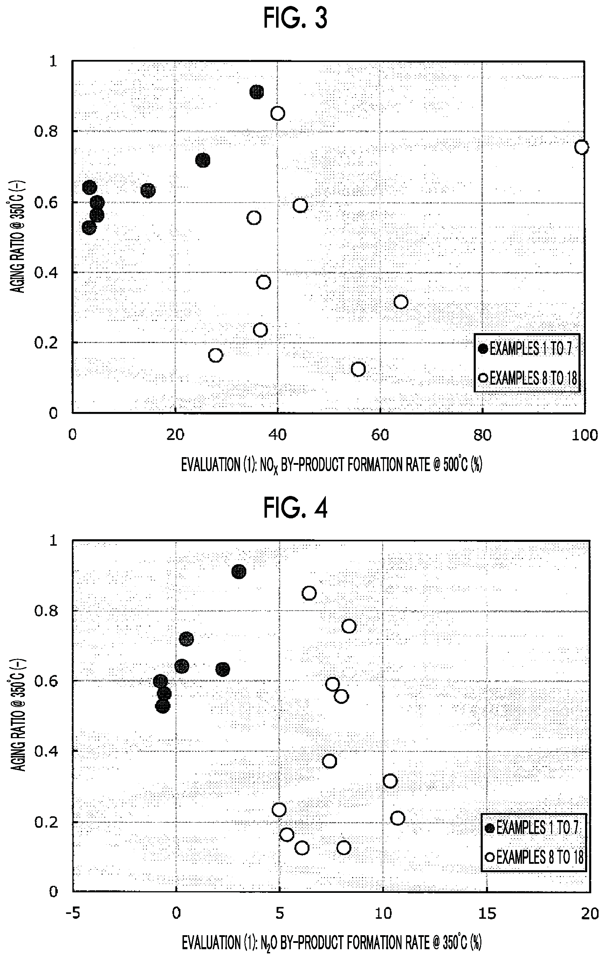

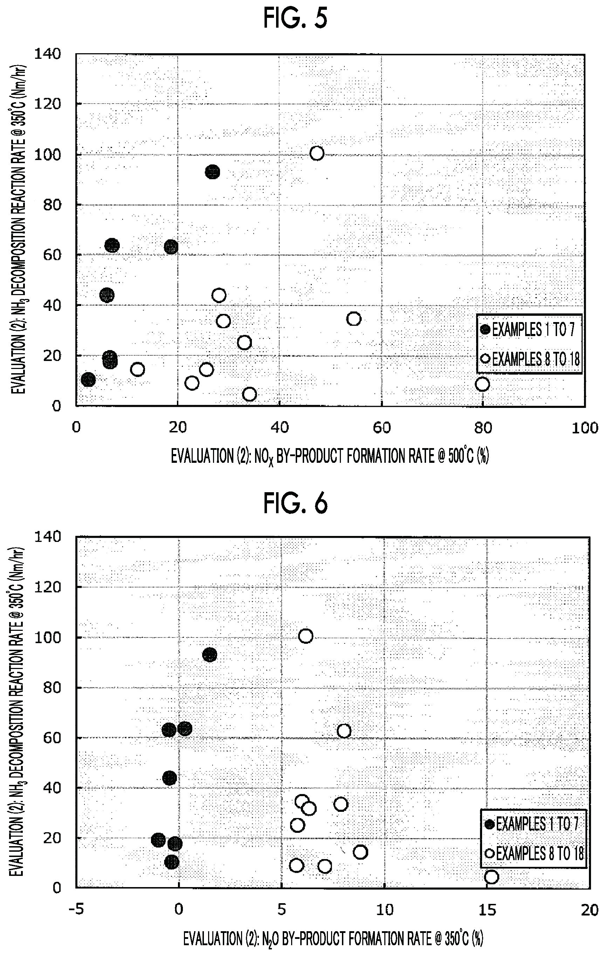

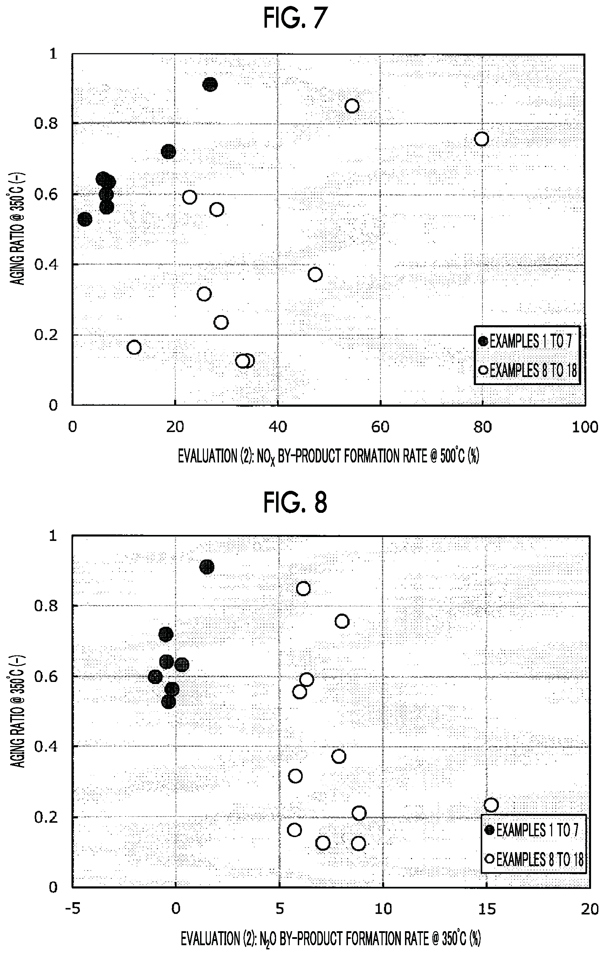

A simulated gas B containing the components shown in Table 2 was passed through the tubular reactor at SV = 10,000 hr⁻¹, the temperature of the tubular reactor was set to 530°C, and this state was maintained for 70 hours (hydrothermal aging). Thereafter, the simulated gas A containing the components shown in Table 1 was passed through the tubular reactor at SV = 10,000 hr⁻¹, and the temperature of the tubular reactor was set to 350°C, 400°C, 450°C, or 500°C. An NH₃ concentration, an NO_{X} concentration, and an N₂O concentration at a reactor outlet were measured, and an NH₃ decomposition reaction rate, an NO_{X} by-product formation rate, and an N₂O by-product formation rate were calculated in the same manner as in Evaluation (1). A ratio of the NH₃ decomposition reaction rate in Evaluation (2) to the NH₃ decomposition reaction rate in Evaluation (1) (aging ratio) was calculated. Results are shown in Tables 4 to 5 and FIGS. 3 to 8.

**[Table 2]**

| Gas type | Concentration |
|---|---|
| O₂ | 20% |
| SO₂ | 20 ppm |
| N₂O | 0 ppm |
| NO | 0 ppm |
| NH₃ | 0 ppm |
| H₂O | 20% |
| N₂O | Balance |

**[Table 3]**

| | NH₃ decomposition reaction rate [Nm/hr]NO_{X} by-product formation rate [%]N₂O by-product formation rate [%] | | | | | | | | | | | |
|---|---|---|---|---|---|---|---|---|---|---|---|---|
| Temperature [°C] | 350 | 400 | 450 | 500 | 350 | 400 | 450 | 500 | 350 | 400 | 450 | 500 |
| Honeycomb catalyst body A | 20 | 48 | 90 | 105 | 1 | 0 | 0 | 3 | -1 | -3 | -3 | -3 |
| Honeycomb catalyst body B | 32 | 59 | 108 | 109 | 0 | 0 | 0 | 5 | -1 | -3 | -3 | -3 |
| Honeycomb catalyst body C | 88 | 109 | 114 | 111 | 1 | 4 | 16 | 25 | 0 | -2 | -3 | -3 |
| Honeycomb catalyst body D | 102 | 113 | 114 | 114 | 5 | 11 | 27 | 36 | 3 | -1 | -2 | -2 |
| Honeycomb catalyst body E | 101 | 107 | 112 | 106 | 4 | 7 | 10 | 15 | 2 | -2 | -3 | -3 |
| Honeycomb catalyst body F | 68 | 90 | 104 | 106 | 0 | 0 | 2 | 3 | 0 | -3 | -3 | -3 |
| Honeycomb catalyst body R | 31 | 59 | 108 | 109 | 0 | 0 | 0 | 5 | -1 | -3 | -3 | -3 |
| Honeycomb catalyst body G | 62 | 92 | 104 | 110 | 5 | 11 | 20 | 35 | 8 | -1 | -2 | -2 |
| Honeycomb catalyst body H | 118 | 115 | 118 | 116 | 27 | 20 | 32 | 40 | 6 | 1 | -2 | -2 |
| Honeycomb catalyst body I | 90 | 102 | 110 | 108 | 17 | 16 | 23 | 37 | 7 | 0 | -2 | -2 |
| Honeycomb catalyst body J | 20 | 77 | 97 | 104 | 11 | 9 | 20 | 37 | 5 | -2 | -2 | -2 |
| Honeycomb catalyst body K | 70 | 114 | 119 | 116 | 9 | 42 | 70 | 87 | 8 | 1 | -1 | -2 |
| Honeycomb catalyst body L | 83 | 114 | 116 | 117 | 9 | 40 | 68 | 99 | 8 | 1 | -1 | -1 |
| Honeycomb catalyst body M | 69 | 111 | 116 | 116 | 31 | 76 | 108 | 136 | 11 | 2 | 0 | -1 |
| Honeycomb catalyst body N | 80 | 88 | 91 | 102 | 19 | 33 | 48 | 64 | 10 | 1 | -1 | -2 |
| Honeycomb catalyst body O | 116 | 120 | 119 | 117 | 5 | 14 | 35 | 56 | 6 | 0 | -2 | -2 |
| Honeycomb catalyst body P | 56 | 88 | 100 | 90 | 6 | 10 | 18 | 28 | 5 | -1 | -2 | -2 |
| Honeycomb catalyst body Q | 54 | 99 | 111 | 110 | 4 | 14 | 30 | 44 | 8 | 0 | -2 | -2 |

**[Table 4]**

| | NH₃ decomposition reaction rate [Nm/hr] | | | | NOₓ by-product formation rate [%] | | | | N₂O by-product formation rate [%] | | | |
|---|---|---|---|---|---|---|---|---|---|---|---|---|
| Temperature [°C] | 350 | 400 | 450 | 500 | 350 | 400 | 450 | 500 | 350 | 400 | 450 | 500 |
| Honeycomb catalyst body A | 10 | 31 | 69 | 96 | 3 | 0 | 1 | 2 | 0 | -3 | -3 | -3 |
| Honeycomb catalyst body B | 19 | 32 | 87 | 108 | 0 | 0 | 1 | 7 | -1 | -3 | -3 | -3 |
| Honeycomb catalyst body C | 63 | 94 | 112 | 102 | 1 | 2 | 11 | 19 | 0 | -3 | -3 | -3 |
| Honeycomb catalyst body D | 93 | 108 | 120 | 109 | 3 | 7 | 23 | 27 | 2 | -2 | -2 | -3 |
| Honeycomb catalyst body E | 64 | 90 | 101 | 97 | 1 | 3 | 5 | 7 | 0 | -3 | -3 | -3 |
| Honeycomb catalyst body F | 44 | 63 | 92 | 95 | 1 | 0 | 3 | 6 | 0 | -3 | -3 | -3 |
| Honeycomb catalyst body R | 18 | 32 | 88 | 108 | 1 | 0 | 1 | 7 | 0 | -3 | -3 | -3 |
| Honeycomb catalyst body G | 35 | 88 | 95 | 84 | 5 | 5 | 12 | 28 | 6 | -2 | -2 | -3 |
| Honeycomb catalyst body H | 101 | 118 | 117 | 116 | 12 | 17 | 36 | 55 | 6 | -1 | -2 | -2 |
| Honeycomb catalyst body I | 34 | 71 | 84 | 107 | 11 | 11 | 26 | 47 | 8 15 | -1 | -2 | -2 |
| Honeycomb catalyst body J | 5 | 57 | 82 | 97 | 72 | 6 | 14 | 29 | | -2 | -3 | -2 |
| Honeycomb catalyst body K | 9 | 56 | 87 | 88 | 21 | 3 | 18 | 34 | 7 | -2 | -3 | -2 |
| Honeycomb catalyst body L | 63 | 93 | 99 | 101 | 11 | | 56 | 80 | 8 | 1 | -1 | -2 |
| Honeycomb catalyst body M | 15 | 71 | 85 | 93 | 16 | 14 | 58 | 102 | 9 | 0 | -1 | -1 |
| Honeycomb catalyst body N | 25 | 95 | 108 | 102 | 7 | 6 | 18 | 26 | 6 | -1 | -2 | -3 |
| Honeycomb catalyst body O | 15 | 53 | 74 | 95 | 14 | 4 | 15 | 33 | 9 | -2 | -2 | -2 |
| Honeycomb catalyst body P | 9 | 26 | 60 | 78 | 22 | 2 | 4 | 12 | 6 | -3 | -3 | -3 |
| Honeycomb catalyst body Q | 32 | 59 | 84 | 96 | 6 | 5 | 11 | 23 | 6 | -2 | -3 | -3 |

**[Table 5]**

| | NH₃ decomposition reaction rate aging ratio | | | |
|---|---|---|---|---|
| Temperature [°C] | 350 | 400 | 450 | 500 |
| Honeycomb catalyst body A | 0.53 | 0.64 | 0.76 | 0.92 |
| Honeycomb catalyst body B | 0.60 | 0.54 | 0.81 | 0.99 |
| Honeycomb catalyst body C | 0.72 | 0.86 | 0.98 | 0.92 |
| Honeycomb catalyst body D | 0.91 | 0.95 | 1.05 | 0.96 |
| Honeycomb catalyst body E | 0.63 | 0.84 | 0.90 | 0.91 |
| Honeycomb catalyst body F | 0.64 | 0.70 | 0.88 | 0.89 |
| Honeycomb catalyst body R | 0.56 | 0.54 | 0.81 | 0.99 |
| Honeycomb catalyst body G | 0.56 | 0.95 | 0.91 | 0.76 |
| Honeycomb catalyst body H | 0.85 | 1.03 | 0.99 | 1.00 |
| Honeycomb catalyst body I | 0.37 | 0.69 | 0.76 | 0.99 |
| Honeycomb catalyst body J | 0.24 | 0.75 | 0.85 | 0.94 |
| Honeycomb catalyst body K | 0.13 | 0.49 | 0.74 | 0.76 |
| Honeycomb catalyst body L | 0.76 | 0.81 | 0.85 | 0.86 |
| Honeycomb catalyst body M | 0.21 | 0.63 | 0.73 | 0.80 |
| Honeycomb catalyst body N | 0.32 | 1.08 | 1.19 | 1.00 |
| Honeycomb catalyst body O | 0.13 | 0.44 | 0.62 | 0.82 |
| Honeycomb catalyst body P | 0.16 | 0.30 | 0.60 | 0.87 |
| Honeycomb catalyst body Q | 0.59 | 0.60 | 0.76 | 0.87 |

**[Table 6]**

| | First catalyst powder Second catalyst powder | | | | |
|---|---|---|---|---|---|
| | Type | Part by mass | Type | Part by mass | Ru/Pt ratio |
| Honeycomb catalyst body A | (1) | 2.0 | (1) | 98.0 | 50 |
| Honeycomb catalyst body B | (2) | 2.0 | (1) | 98.0 | 25 |
| Honeycomb catalyst body C | (3) | 2.0 | (1) | 98.0 | 10 |
| Honeycomb catalyst body D | (4) | 2.0 | (1) | 98.0 | 5 |
| Honeycomb catalyst body E | (5) | 2.0 | (1) | 98.0 | 25 |
| Honeycomb catalyst body F | (6) | 2.0 | (1) | 98.0 | 25 |
| Honeycomb catalyst body R | (2) | 2.0 | (2) | 98.0 | 25 |
| Honeycomb catalyst body G | (a) | 2.0 | (a) | 98.0 | 0 |
| Honeycomb catalyst body H | (b) | 2.0 | (1) | 98.0 | 0 |
| Honeycomb catalyst body I | (c) | 2.0 | (a) | 98.0 | 1 |
| Honeycomb catalyst body J | (d) | 2.0 | (a) | 98.0 | 0 |
| Honeycomb catalyst body K | (e) | 2.0 | (a) | 98.0 | 0 |
| Honeycomb catalyst body L | (f) | 2.0 | (a) | 98.0 | 0 |
| Honeycomb catalyst body M | (d) | 20.0 | (a) | 80.0 | 0 |
| Honeycomb catalyst body N | (g) | 2.0 | (a) | 98.0 | 0 |
| Honeycomb catalyst body O | (h) | 2.0 | (a) | 98.0 | 0 |
| Honeycomb catalyst body P | (i) | 2.0 | (a) | 98.0 | 0 |
| Honeycomb catalyst body Q | (j) | 2.0 | (a) | 98.0 | 0 |

### [Example 2: Honeycomb Catalyst Body B]

### (Preparation of First Catalyst Powder (2))

A first catalyst powder (2) in which 0.2% by mass of platinum and 5.0% by mass of ruthenium were supported on the MFI-type aluminosilicate was obtained in the same manner as in the preparation of the first catalyst powder (1), except that the addition amount of the chloroplatinic acid aqueous solution was changed.

A honeycomb catalyst body B was obtained in the same manner as in the production of the honeycomb catalyst body A, except that the first catalyst powder (1) was changed to the first catalyst powder (2). With respect to the total mass of the first catalyst powder (2) and the second catalyst powder (1), the mass of platinum was 40 ppm and the mass of ruthenium was 1,000 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body B. Results are shown in Tables 3 to 5 and FIGS. 1 to 8.

### [Example 3: Honeycomb Catalyst Body C]

### (Preparation of First Catalyst Powder (3))

A first catalyst powder (3) in which 0.5% by mass of platinum and 5.0% by mass of ruthenium were supported on the MFI-type aluminosilicate was obtained in the same manner as in the preparation of the first catalyst powder (1), except that the addition amount of the chloroplatinic acid aqueous solution was changed.

A honeycomb catalyst body C was obtained in the same manner as in the production of the honeycomb catalyst body A, except that the first catalyst powder (1) was changed to the first catalyst powder (3). With respect to the total mass of the first catalyst powder (3) and the second catalyst powder (1), the mass of platinum was 100 ppm and the mass of ruthenium was 1,000 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body C. Results are shown in Tables 3 to 5 and FIGS. 1 to 8.

### [Example 4: Honeycomb Catalyst Body D]

### (Preparation of First Catalyst Powder (4))

A first catalyst powder (4) in which 1.0% by mass of platinum and 5.0% by mass of ruthenium were supported on the MFI-type aluminosilicate was obtained in the same manner as in the preparation of the first catalyst powder (1), except that the addition amount of the chloroplatinic acid aqueous solution was changed.

A honeycomb catalyst body D was obtained in the same manner as in the production of the honeycomb catalyst body A, except that the first catalyst powder (1) was changed to the first catalyst powder (4). With respect to the total mass of the first catalyst powder (4) and the second catalyst powder (1), the mass of platinum was 200 ppm and the mass of ruthenium was 1,000 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body D. Results are shown in Tables 3 to 5 and FIGS. 1 to 8.

### [Example 5: Honeycomb Catalyst Body E]

### (Preparation of First Catalyst Powder (5))

A first catalyst powder (5) in which 0.2% by mass of platinum and 5.0% by mass of ruthenium were supported on titanosilicate was obtained in the same manner as in the preparation of the first catalyst powder (2), except that the MFI-type aluminosilicate was changed to titanosilicate (composite of titania and silica).

A honeycomb catalyst body E was obtained in the same manner as in the production of the honeycomb catalyst body A, except that the first catalyst powder (1) was changed to the first catalyst powder (5). With respect to the total mass of the first catalyst powder (5) and the second catalyst powder (1), the mass of platinum was 40 ppm and the mass of ruthenium was 1,000 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body E. Results are shown in Tables 3 to 5 and FIGS. 1 to 8.

### [Example 6: Honeycomb Catalyst Body F]

### (Preparation of First Catalyst Powder (6))

A first catalyst powder (6) in which 0.2% by mass of platinum and 5.0% by mass of ruthenium were supported on silica was obtained in the same manner as in the preparation of the first catalyst powder (2), except that the MFI-type aluminosilicate was changed to silica (Si oxide).

A honeycomb catalyst body F was obtained in the same manner as in the production of the honeycomb catalyst body A, except that the first catalyst powder (1) was changed to the first catalyst powder (6). With respect to the total mass of the first catalyst powder (6) and the second catalyst powder (1), the mass of platinum was 40 ppm and the mass of ruthenium was 1,000 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body F. Results are shown in Tables 3 to 5 and FIGS. 1 to 8.

### [Example 7: Honeycomb Catalyst Body R]

### (Preparation of Second Catalyst Powder (2))

A second catalyst powder (2) consisting of OSDA-free BEA-type aluminosilicate ion-exchanged with Fe ions was obtained in the same manner as in the preparation of the second catalyst powder (1), except that the OSDA-free BEA-type aluminosilicate (SiO₂/Al₂O₃ ratio = 12, specific surface area = 370 m²/g) was changed to OSDA-free BEA-type aluminosilicate (SiO₂/Al₂O₃ ratio = 10, specific surface area = 370 m²/g).

A honeycomb catalyst body R was obtained in the same manner as in the production of the honeycomb catalyst body B, except that the second catalyst powder (1) was changed to the second catalyst powder (2). With respect to the total mass of the first catalyst powder (2) and the second catalyst powder (2), the mass of platinum was 40 ppm and the mass of ruthenium was 1,000 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body R. Results are shown in Tables 3 to 5 and FIGS. 1 to 8.

### [Example 8: Honeycomb Catalyst Body G]

### (Preparation of First Catalyst Powder (a))

A chloroplatinic acid aqueous solution and a cerium nitrate hexahydrate were added to pure water, and stirred to obtain a dipping solution having a predetermined concentration. Titanosilicate (composite of titania and silica) was added to the dipping solution and stirred to obtain a slurry. The slurry was evaporated to dryness. The obtained dry solid was dried at 120°C for 2 hours or longer. The obtained dried material was subjected to a sintering treatment by heating it from room temperature to 500°C at a temperature raising rate of 250 °C/h in air and then maintaining it at 500°C for 2 hours. The obtained sintered product was dry-pulverized to obtain a first catalyst powder (a) in which 0.5% by mass of platinum and 2.5% by mass of cerium were supported on the titanosilicate.

### (Preparation of Second Catalyst Powder (a))

Iron sulfate heptahydrate was dissolved in 1 L of ion-exchanged water at 80°C to obtain an iron sulfate aqueous solution (Fe concentration = 3% by mass) at 80°C. The pH of the iron sulfate aqueous solution was 3.6. To the iron sulfate aqueous solution, 60 g (dry mass) of BEA-type aluminosilicate (SiO₂/Al₂O₃ ratio = 25 [mol/mol], nominal cation form = ammonium ion, Na₂O = 0.05% by weight, specific surface area = 680 m²/g) was added, and the mixture was stirred for 2 hours while the temperature was maintained at 80°C to perform an ion exchange treatment, thereby obtaining a slurry. The slurry was subjected to a dehydration treatment using a suction funnel equipped with filter paper. Pure water was poured onto the cake on the filter paper to wash the cake. The washed cake was dried at 120°C for 4 hours or longer. The obtained dried material was pulverized. The pulverized product was subjected to a sintering treatment by heating it from room temperature to 500°C at a temperature raising rate of 100 °C/h in air and then maintaining it at 500°C for 5 hours. The obtained sintered product was dry-pulverized to obtain a second catalyst powder (a) consisting of BEA-type aluminosilicate ion-exchanged with Fe ions.

### (Production of Catalyst Body)

2 parts by mass of the first catalyst powder (a), 98 parts by mass of the second catalyst powder (a), silica sol (OS-1 manufactured by Nissan Chemical Corporation), and alumina sol (AS-200 manufactured by Nissan Chemical Corporation) were added to pure water to obtain a slurry. A cordierite honeycomb substrate (50 cpsi) was dipped in the slurry. The cordierite honeycomb substrate was withdrawn from the slurry, and subjected to an air blow treatment to drain liquid. Next, the resultant was dried at 120°C for 2 hours or longer. The obtained dried material was subjected to a sintering treatment by heating it from room temperature to 500°C at a temperature raising rate of 250 °C/h in air and then maintaining it at 500°C for 2 hours, thereby obtaining a honeycomb catalyst body G. The mass of platinum with respect to the total mass of the first catalyst powder (a) and the second catalyst powder (a) was 100 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body G. Results are shown in Tables 3 to 5 and FIGS. 1 to 8.

### [Example 9: Honeycomb Catalyst Body H]

### (Preparation of First Catalyst Powder (b))

A first catalyst powder (b) in which 1.0% by mass of platinum and 5% by mass of cerium were supported on the titanosilicate was obtained in the same manner as in the preparation of the first catalyst powder (a), except that the addition amounts of the chloroplatinic acid aqueous solution and the cerium nitrate hexahydrate were changed.

A honeycomb catalyst body H was obtained in the same manner as in the production of the honeycomb catalyst body A, except that the first catalyst powder (1) was changed to the first catalyst powder (b). The mass of platinum with respect to the total mass of the first catalyst powder (b) and the second catalyst powder (1) was 200 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body H. Results are shown in Tables 3 to 5 and FIGS. 1 to 8.

### [Example 10: Honeycomb Catalyst Body I]

### (Preparation of First Catalyst Powder (c))

A first catalyst powder (c) in which 0.5% by mass of platinum, 0.5% by mass of ruthenium, and 2.5% by mass of cerium were supported on the titanosilicate was obtained in the same manner as in the preparation of the first catalyst powder (a), except that a ruthenium nitrate aqueous solution was added to pure water in addition to the chloroplatinic acid aqueous solution and the cerium nitrate hexahydrate.

A honeycomb catalyst body I was obtained in the same manner as in the production of the honeycomb catalyst body G, except that the first catalyst powder (a) was changed to the first catalyst powder (c). With respect to the total mass of the first catalyst powder (c) and the second catalyst powder (a), the mass of platinum was 100 ppm and the mass of ruthenium was 100 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body I. Results are shown in Tables 3 to 5 and FIGS. 1 to 8.

### [Example 11: Honeycomb Catalyst Body J]

### (Preparation of First Catalyst Powder (d))

A first catalyst powder (d) in which 0.05% by mass of platinum and 0.25% by mass of cerium were supported on silica was obtained in the same manner as in the preparation of the first catalyst powder (a), except that the amounts of the chloroplatinic acid aqueous solution and the cerium nitrate hexahydrate added were changed, and the titanosilicate was changed to silica.

A honeycomb catalyst body J was obtained in the same manner as in the production of the honeycomb catalyst body G, except that the first catalyst powder (a) was changed to the first catalyst powder (d). The mass of platinum with respect to the total mass of the first catalyst powder (d) and the second catalyst powder (a) was 10 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body J. Results are shown in Tables 3 to 5 and FIGS. 1 to 8.

### [Example 12: Honeycomb Catalyst Body K]

### (Preparation of First Catalyst Powder (e))

A first catalyst powder (e) in which 0.25% by mass of platinum and 1.25% by mass of cerium were supported on silica was obtained in the same manner as in the preparation of the first catalyst powder (a), except that the amounts of the chloroplatinic acid aqueous solution and the cerium nitrate hexahydrate added were changed, and the titanosilicate was changed to silica.

A honeycomb catalyst body K was obtained in the same manner as in the production of the honeycomb catalyst body G, except that the first catalyst powder (a) was changed to the first catalyst powder (e). The mass of platinum with respect to the total mass of the first catalyst powder (e) and the second catalyst powder (a) was 50 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body K. Results are shown in Tables 3 to 5 and FIGS. 1 to 8.

### [Example 13: Honeycomb Catalyst Body L]

### (Preparation of First Catalyst Powder (f))

A first catalyst powder (f) in which 0.5% by mass of platinum and 2.5% by mass of cerium were supported on silica was obtained in the same manner as in the preparation of the first catalyst powder (a), except that the amounts of the chloroplatinic acid aqueous solution and the cerium nitrate hexahydrate added were changed, and the titanosilicate was changed to silica.

A honeycomb catalyst body L was obtained in the same manner as in the production of the honeycomb catalyst body G, except that the first catalyst powder (a) was changed to the first catalyst powder (f). The mass of platinum with respect to the total mass of the first catalyst powder (f) and the second catalyst powder (a) was 100 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body L. Results are shown in Tables 3 to 5 and FIGS. 1 to 8.

### [Example 14: Honeycomb Catalyst Body M]

A honeycomb catalyst body M was obtained in the same manner as in the production of the honeycomb catalyst body J, except that the mass ratio of the first catalyst powder (d) and the second catalyst powder (a) was changed from 2:98 to 20:80. The mass of platinum with respect to the total mass of the first catalyst powder (d) and the second catalyst powder (a) was 100 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body M. Results are shown in Tables 3 to 5 and FIGS. 1 to 8.

### [Example 15: Honeycomb Catalyst Body N]

### (Preparation of First Catalyst Powder (g))

A first catalyst powder (g) in which 0.5% by mass of platinum and 2.5% by mass of cerium were supported on MOR-type aluminosilicate was obtained in the same manner as in the preparation of the first catalyst powder (a), except that the titanosilicate was changed to MOR-type aluminosilicate.

A honeycomb catalyst body N was obtained in the same manner as in the production of the honeycomb catalyst body G, except that the first catalyst powder (a) was changed to the first catalyst powder (g). The mass of platinum with respect to the total mass of the first catalyst powder (g) and the second catalyst powder (a) was 100 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body N. Results are shown in Tables 3 to 5 and FIGS. 1 to 8.

### [Example 16: Honeycomb Catalyst Body O]

### (Preparation of First Catalyst Powder (h))

A first catalyst powder (h) in which 0.5% by mass of platinum and 2.5% by mass of cerium were supported on BEA-type aluminosilicate was obtained in the same manner as in the preparation of the first catalyst powder (a), except that the titanosilicate was changed to BEA-type aluminosilicate.

A honeycomb catalyst body O was obtained in the same manner as in the production of the honeycomb catalyst body G, except that the first catalyst powder (a) was changed to the first catalyst powder (h). The mass of platinum with respect to the total mass of the first catalyst powder (h) and the second catalyst powder (a) was 100 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body O. Results are shown in Tables 3 to 5 and FIGS. 1 to 8.

### [Example 17: Honeycomb Catalyst Body P]

### (Preparation of First Catalyst Powder (i))

A first catalyst powder (i) in which 0.25% by mass of platinum and 1.25% by mass of cerium were supported on titania was obtained in the same manner as in the preparation of the first catalyst powder (e), except that the silica was changed to titania.

A honeycomb catalyst body P was obtained in the same manner as in the production of the honeycomb catalyst body G, except that the first catalyst powder (a) was changed to the first catalyst powder (i). The mass of platinum with respect to the total mass of the first catalyst powder (i) and the second catalyst powder (a) was 50 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body P. Results are shown in Tables 3 to 5 and FIGS. 1 to 8.

### [Example 18: Honeycomb Catalyst Body Q]

### (Preparation of First Catalyst Powder (j))

A first catalyst powder (j) in which 0.5% by mass of platinum and 2.5% by mass of cerium were supported on titania was obtained in the same manner as in the preparation of the first catalyst powder (f), except that the silica was changed to titania.

A honeycomb catalyst body Q was obtained in the same manner as in the production of the honeycomb catalyst body G, except that the first catalyst powder (a) was changed to the first catalyst powder (j). The mass of platinum with respect to the total mass of the first catalyst powder (j) and the second catalyst powder (a) was 100 ppm.

The NH₃ decomposition reaction rate, the NO_{X} by-product formation rate, the N₂O by-product formation rate, and the aging ratio were calculated in the same manner as in Evaluation (1) and Evaluation (2), except that the honeycomb catalyst body A was changed to the honeycomb catalyst body Q. Results are shown in Tables 3 to 5 and FIGS. 1 to 8.

In the catalyst bodies produced in Examples 1 to 7, the N₂O by-product formation rate and the NO_{X} by-product formation rate were low and the NH₃ decomposition reaction rate was high in both Evaluation (1) and Evaluation (2), as compared with the catalyst bodies produced in Examples 8 to 18 (see FIGS. 1 and 2 and FIGS. 5 and 6). The catalyst bodies produced in Examples 1 to 7 had a higher aging ratio than the catalyst bodies produced in Examples 8 to 18 (see FIGS. 3 and 4 and FIGS. 7 and 8).

From the above results, the catalyst according to the present invention can promote a gas-phase decomposition reaction of ammonia (NH₃) while suppressing by-product formation of NO_{X} and/or N₂O, and can promote a gas-phase decomposition reaction of NO_{X} and/or N₂O.

## Claims

1. A catalyst for gas-phase ammonia decomposition, comprising, as an active catalyst component: a mixture of a first catalyst powder that contains a support containing at least one selected from the group consisting of ceria, silica, alumina, titania, zirconia, titanosilicate, and aluminosilicate, and contains ruthenium and platinum supported on the support, and a second catalyst powder that contains at least one selected from the group consisting of iron ion-exchanged BEA-type aluminosilicate, cobalt ion-exchanged BEA-type aluminosilicate, and copper ion-exchanged BEA-type aluminosilicate,
wherein, in the first catalyst powder, an amount of the platinum with respect to 1 part by mass of the ruthenium is 0.001 parts by mass or more and less than 1 part by mass.

2. The catalyst according to claim 1, wherein, in the first catalyst powder, the amount of the platinum with respect to 1 part by mass of the ruthenium is 0.01 parts by mass or more and less than 0.5 parts by mass, an amount of the platinum contained in 100 parts by mass of the first catalyst powder is 0.01 to 2 parts by mass, and an amount of the ruthenium contained in 100 parts by mass of the first catalyst powder is 2 to 10 parts by mass.

3. The catalyst according to claim 1, wherein, in the first catalyst powder, the amount of the platinum with respect to 1 part by mass of the ruthenium is 0.01 parts by mass or more and less than 0.5 parts by mass, an amount of the platinum contained in 100 parts by mass of a total amount of the first catalyst powder and the second catalyst powder is 0.001 to 0.1 parts by mass, and an amount of the ruthenium contained in 100 parts by mass of the total amount of the first catalyst powder and the second catalyst powder is 0.01 to 1 part by mass.

4. The catalyst according to claim 1, 2, or 3, wherein, in the first catalyst powder, the support contains at least one selected from the group consisting of silica, titanosilicate, MEL-type aluminosilicate, and MFI-type aluminosilicate.

5. The catalyst according to claim 1, 2, or 3, wherein the second catalyst powder contains iron ion-exchanged BEA-type aluminosilicate.

6. The catalyst according to claim 1, 2, or 3, wherein the second catalyst powder contains iron ion-exchanged OSDA-free BEA-type aluminosilicate.

7. A catalyst body for gas-phase ammonia decomposition, comprising:
a substrate; and
the catalyst according to claim 1, 2, or 3 supported on the substrate.

8. A catalyst body for gas-phase ammonia decomposition, consisting of a shaped body including the catalyst according to claim 1, 2, or 3.

9. A process comprising performing, in a gas to be treated, in the presence of the catalyst according to claim 1, 2, or 3,
a chemical reaction that converts NH₃ into nitrogen and water, and
a chemical reaction that converts NO_{X} and N₂O into nitrogen and water.

10. A process for performing, in a gas to be treated, a chemical reaction that converts NH₃ into nitrogen and water and a chemical reaction that converts NO_{X} and N₂O into nitrogen and water, the process comprising:
continuously passing the gas to be treated through a first catalyst layer in which a catalyst is placed, the catalyst including, as an active catalyst component, only a second catalyst powder containing at least one selected from the group consisting of iron ion-exchanged BEA-type aluminosilicate, cobalt ion-exchanged BEA-type aluminosilicate, and copper ion-exchanged BEA-type aluminosilicate; and
subsequently continuously passing the gas to be treated through a second catalyst layer in which the catalyst according to claim 1, 2, or 3 is placed.

11. A process for performing, in a gas to be treated, a chemical reaction that converts NH₃ into nitrogen and water and a chemical reaction that converts NO_{X} and N₂O into nitrogen and water, the process comprising:
continuously passing the gas to be treated through a first catalyst layer in which the catalyst according to claim 1, 2, or 3 is placed; and
subsequently continuously passing the gas to be treated through a second catalyst layer in which the catalyst according to claim 1, 2, or 3 is placed,
wherein a proportion of the platinum contained in the catalyst placed in the first catalyst layer is less than a proportion of the platinum contained in the catalyst placed in the second catalyst layer.

12. The process according to claim 9, further comprising adding, to the gas to be treated, at least one reaction aid selected from the group consisting of ammonia and urea.

13. A device for gas-phase ammonia decomposition, comprising:
a first catalyst layer in which a catalyst is placed, the catalyst including, as an active catalyst component, only a second catalyst powder containing at least one selected from the group consisting of iron ion-exchanged BEA-type aluminosilicate, cobalt ion-exchanged BEA-type aluminosilicate, and copper ion-exchanged BEA-type aluminosilicate; and
a second catalyst layer in which the catalyst according to claim 1, 2, or 3 is placed, the second catalyst layer being disposed downstream of the first catalyst layer.

14. A device for gas-phase ammonia decomposition, comprising:
a first catalyst layer in which the catalyst according to claim 1, 2, or 3 is placed; and
a second catalyst layer in which the catalyst according to claim 1, 2, or 3 is placed, the second catalyst layer being disposed downstream of the first catalyst layer,
wherein a proportion of the platinum contained in the catalyst placed in the first catalyst layer is less than a proportion of the platinum contained in the catalyst placed in the second catalyst layer.
